# EUROPÄISCHE PATENTANMELDUNG

(11) **EP 4 509 018 A1**
(43) Veröffentlichungstag der Anmeldung: **19.02.2025**
(21) Anmeldenummer: 24190932.4
(22) Anmeldetag: 25.07.2024
(51) Int. Cl.: A47C 23/00, F16F 1/18

(54) **FEDERELEMENT FÜR EINE POLSTERUNTERLAGE UND ANORDNUNG MIT MEHREREN FEDERELEMENTEN**

(30) Priorität: 17.08.2023 DE 202023104680 U
(71) Anmelder: Froli Kunststoffwerk e.Kfr., 33758 Schloß Holte-Stukenbrock (DE)
(72) Erfinder:
(74) Vertreter: Bittner, Thomas L.

(57) **Zusammenfassung**

Die Offenbarung betrifft ein Federelement (1) für eine Polsterunterlage, mit einem Auflageteller (2); Basen, jeweils aufweisend ein Befestigungsmittel zum Befestigen des Federelements (1) auf einem Trägermaterial; und Federarmen (5), jeweils aufweisend äußere Enden, die mit dem Auflageteller (2) verbunden sind, und einen mittleren Abschnitt, der eine zugehörige Basis der Basen umfasst, wobei die Federarme (5) im Wesentlichen parallel zueinander ausgebildet sind. Ferner wird eine Anordnung mit mehreren Federelementen (1) bereitgestellt.

## Beschreibung

Die Erfindung betrifft ein Federelement für eine Polsterunterlage und eine Anordnung mit mehreren Federelementen.

### Hintergrund

Federelemente für eine Polsterunterlage werden genutzt, um beispielsweise mittels einer Anordnung aus einer Vielzahl an Federelementen eine nachgebende Polsterunterlage herzustellen, auf der dann ein Polster zum Ausbilden einer Sitz- oder Liegefläche abgelegt werden kann. Es sind Anordnungen mit mehreren Federelementen bekannt, bei denen die Federelemente einer regelmäßigen oder einer unregelmäßigen Struktur entsprechend über eine Fläche verteilt angeordnet sind. Die Federelemente verfügen über eine Basis, die bei der Montage des Federelementes auf einer Unterlage / einem Trägermaterial zur Auflage kommt, sowie einen Auflageteller und hierzwischen angeordnete Federarme. Die Auflageteller der mehreren Federelemente bilden gemeinsam eine Auflagefläche für das Polster. Es sind Ausführungen bekannt, bei denen jedes einzelne Federelement auf der Unterlage / Trägermaterial separat befestigt wird, zum Beispiel mittels einer Schraube oder eines Nagels, mit dem die Basis auf der Unterlage befestigt wird, bei der es sich zum Beispiel um eine Holzplatte handeln kann. Auch sind Anordnungen bekannt, bei denen mehrere Federelemente nebeneinander entlang einer Leiste auf diese Art und Weise befestigt sind.

Das Dokument DE 2020 14 104 824 U1 offenbart beispielsweise eine Anordnung von Federelementen für eine Polsterunterlage, mit mehreren Federelementen, bei denen zwischen einer Basis und einem Auflageteller jeweils Federarme angeordnet sind, wobei die Federelemente nebeneinanderliegend angeordnet sind, derart, dass die Auflageteller der mehreren Federelemente gemeinsam eine Auflagefläche aufspannen.

Die aus dem Dokument DE 2020 14 104 824 U1 bekannten Federelemente weisen eine einzelne Basis mit einem einzelnen Befestigungsmittel auf.

### Zusammenfassung

Aufgabe der Erfindung ist es, ein Federelement für eine Polsterunterlage und eine Anordnung mit mehreren Federelementen anzugeben, mit denen verbesserte Befestigungstechniken und geringerer Materialbedarf bereitgestellt sind.

Zur Lösung sind ein Federelement für eine Polsterunterlage und eine Anordnung mit mehreren Federelementen nach den unabhängigen Ansprüchen 1 und 15 geschaffen. Ausgestaltungen sind Gegenstand abhängiger Unteransprüche.

Nach einem Aspekt ist ein Federelement für eine Polsterunterlage geschaffen. Das Federelement weist Folgendes auf: einen Auflageteller, Basen, jeweils aufweisend ein Befestigungsmittel zum Befestigen des Federelements auf einem Trägermaterial, und Federarme, jeweils aufweisend äußere Enden, die mit dem Auflageteller verbunden sind, und einen mittleren Abschnitt, der eine zugehörige Basis der Basen umfasst, wobei die Federarme im Wesentlichen parallel zueinander ausgebildet sind.

Nach einem weiteren Aspekt ist eine Anordnung mit mehreren solchen Federelementen geschaffen, wobei: die Federelemente nebeneinanderliegend angeordnet sind, derart, dass die Auflageteller der mehreren Federelemente gemeinsam eine Auflagefläche aufspannen, und die Federelemente über die Befestigungsmittel auf dem Trägermaterial befestigt sind.

Das Federelement kann genau zwei Federarme aufweisen. Jedes der zwei Federarme kann genau eine Basis mit genau einem Befestigungsmittel aufweisen. Alternativ kann das Federelement drei, vier oder mehr Federarme aufweisen. Die Federarme können in äquidistanten Abständen nebeneinander angeordnet sein.

Die im Wesentlichen parallelen Federarme können in einem Winkel zueinander angeordnet sein, der kleiner als 1 Grad, bevorzugt kleiner als 0,1 Grad, weiter bevorzugt kleiner als 0,01 Grad ist. Die Federarme können parallel zueinander ausgebildet sein.

Das Befestigungsmittel kann ein Mittel sein, mit dessen Hilfe eine Befestigung am Trägermaterial ermöglicht ist. Hierbei kann es sich zum Beispiel um eine Durchgangsbohrung handeln. Mittels des Befestigungsmittels Durchgangsbohrung ist eine Befestigung über eine Schraube, einen Nagel und / oder eine Niete ermöglicht. Schraube, Nagel, Niete oder dergleichen sind optional vom Begriff "*Befestigungsmittel"* gemäß hiesiger Verwendung umfasst.

Das Federelement kann in einem kartesischen Koordinatensystem mit x-, y- und z-Achse angeordnet sein. Die y-Achse kann parallel zu der Flächennormalen der von den Basen abgewandten Seite des Auflagetellers angeordnet sein. Insbesondere kann die y-Achse in die gleiche Richtung zeigen wie die Flächennormale der von den Basen abgewandten Seite des Auflagetellers. Die y-Achse kann nach oben zeigen. Eine Draufsicht ist eine Sicht parallel und entgegengesetzt zu der y-Achse. In anderen Worten ist die Draufsicht eine Sicht von oben bzw. eine Sicht senkrecht auf die Seite des Auflagetellers, die den Basen abgewandt ist. Die x-Achse kann parallel zu den Federarmen verlaufen.

Die Federarme können gleich sein. Sie können aus dem gleichen Material sein und / oder die gleiche Form haben. Insbesondere können hier beschriebene Merkmale eines Federarms entsprechend auch für einen oder mehrere weitere Federarme bereitgestellt sein.

Die Basen können voneinander beabstandet sein. Die Basen können in Bezug auf den Auflageteller auf der gleichen Höhe angeordnet sein. Die Basen können auf der gleichen Ebene, die parallel zu der x-z-Ebene angeordnet sein kann, liegen. Auf dieser Ebene / dieser Höhe können die Basen frei von einer (Material-)Verbindung sein. Die Basen können lediglich über die Federarme und den Auflageteller miteinander verbunden sein. Die Basen können frei von einer direkten (Material-)Verbindung sein.

Auch die Federarme können frei von einer direkten (Material-)Verbindung sein. Die Federarme können lediglich über den Auflageteller miteinander verbunden sein.

Zumindest einer der Federarme kann in einer Draufsicht krümmungsfrei sein. Die Federarme können parallel zu der x-Achse angeordnet sein. Die Federarme können sich im Wesentlichen über die gesamte Breite des Auflagetellers erstrecken. Die Verbindungen zwischen den Federarmen und dem Auflageteller kann an einem äußeren Rand des Auflagetellers ausgebildet sein.

Zumindest einer der Federarme kann abschnittsweise oder vollständig als Blattfederarm ausgebildet sein. Die Federarme des Federelementes können mit derselben Federkonstante hergestellt sein.

Zumindest einer der Federarme kann in Bezug auf den Auflageteller einen konvexen Bogen formen. Der Federarm kann sich ausgehend vom Auflageteller nach unten wölben. Die Basis des Federarms kann den untersten Abschnitt des Federarms darstellen. Der Federarm kann achsensymmetrisch sein. Das Federelement kann achsensymmetrisch sein. In einer Sicht senkrecht zu den Federarmen (parallel zur z-Achse - Sicht von vorne / hinten) kann zumindest ein Federarm einen konvexen Bogen formen.

Das Federelement kann einstückig geformt sein. Alternativ können die Federelemente mehrstückig gebildet sein, zum Beispiel mit mehreren zusammensteckbaren Abschnitten. Das Federelement kann mittels Spritzgussverfahren hergestellt sein. Das Federelement kann aus einem Elastomer hergestellt sein, zum Beispiel einem thermo-plastischen Elastomer.

Zumindest einer der Federarme kann sich zur Verbindung mit dem Auflageteller hin in seiner Dicke verjüngen. Die Dicke kann die Ausdehnung des Federarms in vertikale Richtung / y-Richtung sein. Die Dicke kann die Ausdehnung des Federarms orthogonal zu seiner dem Auflageteller zu- und / oder abgewandten Oberfläche sein. Die Breite des Federarms kann die Ausdehnung des Federarms senkrecht zu seiner langen Seite sein. Die Breite des Federarms kann die Ausdehnung des Federarms in x-Richtung sein. Die Breite des Federarms kann entlang seiner gesamten Länge im Wesentlichen konstant sein. Lediglich an äußeren Enden des Federarms kann sich die Breite des Federarms vergrößern. Die Breite des Federarms kann größer als die Dicke sein. Insbesondere kann die kleinste Breite des Federarms größer als die größte Dicke des Federarms sein.

Zumindest eines der Befestigungsmittel kann ein Befestigungsloch aufweisen. Das Befestigungsloch kann eine Durchgangsbohrung sein. Das Befestigungsmittel kann mittig des Federarms vorgesehen sein. Das Befestigungsloch kann zur Befestigung des Federelements an einem Trägermaterial mittels Schraube, Nagel und / oder Niete eingerichtet sein. Um das Befestigungsloch herum kann eine Vertiefung / Ausnehmung der Basis bereitgestellt sein. Die Vertiefung / Ausnehmung kann als Senkung für einen Schrauben-, Nagel-, und / oder Nietenkopf ausgestaltet sein. Alternativ kann eine anders geformte Vertiefung / Ausnehmung der Basis bereitgestellt sein, beispielsweise mit einer Größe, welche die Verwendung eines Betätigungswerkzeugs für ein Befestigungsmittel innerhalb der Vertiefung / Ausnehmung ermöglicht. Als weitere Alternative kann sowohl eine Senkung als auch eine größere Vertiefung / Ausnehmung vorgesehen sein, insbesondere eine Senkung für einen Schrauben-, Nagel-, und / oder Nietenkopf innerhalb einer größeren Vertiefung / Ausnehmung, beispielsweise an deren Boden.

Der Auflageteller kann Durchbrüche aufweisen. Die Durchbrüche können parallel zu den Federarmen angeordnet sein. Die Durchbrüche können entlang ihrer langen Seite eine im Wesentlichen konstante Breite aufweisen. Die Durchbrüche können sich im Wesentlichen entlang der gesamten Breite des Auflagetellers erstrecken, wobei randseitig des Auflagetellers schmale Brücken verbleiben, derart, dass der Auflageteller durch die Durchbrüche nicht durchtrennt wird. Der Auflageteller kann zwei Durchbrüche aufweisen. Zusätzlich oder alternativ kann der Auflageteller weitere Durchbrüche aufweisen. Die weiteren Durchbrüche können kleiner, insbesondere hinsichtlich ihrer Fläche mehr als zweimal, dreimal, fünfmal oder zehnmal kleiner, als die Durchbrüche sein. Die weiteren Durchbrüche können von den Querstreben umfasst sein.

Der Auflageteller kann Versteifungsrippen aufweisen. Die Versteifungsrippen können die Steifigkeit (z. B. Verdrehsteifigkeit) des Auflagetellers erhöhen. In Bereichen der Versteifungsrippen kann die Dicke des Auflagetellers größer sein als in benachbarten Bereichen des Auflagetellers. Die Dicke des Auflagetellers kann die Ausdehnung des Auflagetellers senkrecht zu der den Basen zu- oder abgewandten Seite des Auflagetellers sein. Die Dicke des Auflagetellers kann die Ausdehnung des Auflagetellers in y-Richtung sein.

Der Auflageteller kann eine rechteckige, bevorzugt quadratische, äußere Form haben. Die Ecken können abgerundet sein. Der Auflageteller kann eine konkave äußere Form haben. Der Auflageteller kann in sich zusammenhängend sein. Der Auflageteller kann einen konkaven umlaufenden Rand aufweisen, der durchgehend von einem Material gebildet ist. Die von den Basen abgewandte Oberfläche des Auflagetellers kann in einer Ebene liegen.

Die Federarme können in einer Draufsicht überlappungsfrei in den Durchbrüchen angeordnet sein. In Draufsicht können die Federarme vollständig in den Durchbrüchen angeordnet sein. Hierbei ist der Auflageteller in einer Draufsicht frei von Abschnitten, die die Federarme verdecken.

Hierdurch ist es ermöglicht, dass sich das Federelement derart komprimiert, dass die Basen und der Auflageteller auf derselben Ebene liegen. Das Federelement hat also einen hohen Nutzungsgrad. Somit sind flache Anordnungen mir solchen Federelementen als Polsterunterlage ermöglicht.

Beim Blick von oben (Draufsicht) können Spalten zwischen zumindest einem der Federelemente und den Rändern des zugehörigen Durchbruchs gebildet sein. Im Bereich eines Spalts kann die Spaltbreite im Wesentlichen gleichbleibend sein.

Der Auflageteller kann äußere Randstege und Querstege, die diese Randstege miteinander verbinden, aufweisen. Die Randstege können senkrecht zu den Querstegen angeordnet sein. Zwischen den Querstegen können die Durchbrüche angeordnet sein. Das Federelement kann drei Querstege und zwei Randstege umfassen. Der mittlere Quersteg der drei Querstege kann breiter sein als die äußeren Querstege. Die Randstege und / oder Querstege können im Wesentlichen horizontal verlaufen.

Die Federarme können über die Randstege mit dem Auflageteller verbunden sein. Die Randstege können alternierend eine Verbindung mit einem Quersteg und eine Verbindung mit einem Federarm umfassen, wobei endseitig Verbindungen mit Querstegen bereitgestellt sein können.

Die Federarme und die Querstege können in einer Draufsicht im Wesentlichen parallel zueinander angeordnet sein.

Die Querstege können derart mit den Randstegen verbunden sein, dass die Randstege relativ zueinander verlagerbar sind. Die Verbindung zwischen zumindest einem der Randstege und zumindest einem der Querstege kann auf Belastung, insbesondere Zugbelastung, elastisch reversibel von einem ersten Zustand in einen zweiten Zustand übergehen, wobei in dem zweiten Zustand der Abstand zwischen dem zumindest einen Randsteg und dem zumindest einen Quersteg größer ist als im ersten Zustand. Diese Verbindung kann zu einem wesentlichen Teil der Federwirkung des Federelements beitragen. Die Verbindung zwischen zumindest einem der Randstege und zumindest einem der Querstege kann eine U-Form haben.

Die Querstege und die Federarme können in einer Draufsicht überlappungsfrei sein.

Die Federelemente können mittels Schrauben und / oder Nieten auf dem Trägermaterial befestigt sein.

Die Anordnung kann eine Polsterunterlage sein. Die Polsterunterlage kann mehrere auf einem Trägermaterial befestigte Federelemente aufweisen, wobei die Federelemente über das Trägermaterial untereinander verbunden sind, derart, dass die Federelemente in ihrer Relativlage zueinander fixiert sind. Es können Federelemente in der Anordnung miteinander kombiniert werden, bei denen die Federarme unterschiedliche Federkonstanten aufweisen. Die Federelemente sind frei auf dem Trägermaterial montierbar. Dadurch, dass das Federelement zumindest zwei Basen mit zugehörigen Befestigungsmitteln aufweist, ist das Federelement rotationsfest montierbar.

Die Formulierung "*im Wesentlichen",* wie beispielsweise in der Angabe, dass die Federarme und die Querstege in einer Draufsicht im Wesentlichen parallel zueinander angeordnet sein können, kann hier jeweils weggelassen werden, derart, dass die nachfolgende Angabe dann genau vorliegt, was Fehlergrenzen einschließen kann. Mithin können die Federarme und die Querstege in einer Draufsicht parallel zueinander angeordnet sein.

In Verbindung mit der Anordnung können die vorangehend im Zusammenhang mit dem Federelement beschriebenen Ausgestaltungen entsprechend vorgesehen sein und *vice versa.*

### Beschreibung von Ausführungsbeispielen

Im Folgenden werden weitere Ausführungsbeispiele unter Bezugnahme auf Figuren einer Zeichnung näher erläutert. Hierbei zeigen:
- Fig. 1: eine schematische Darstellung eines Federelements für eine Polsterunterlage;
- Fig. 2: eine perspektivische Darstellung des Federelements aus Fig. 1 von oben;
- Fig. 3: eine perspektivische Darstellung des Federelements aus Fig. 1 von vorn;
- Fig. 4: eine perspektivische Darstellung des Federelements aus Fig. 1 von der Seite;
- Fig. 5: eine perspektivische Darstellung des Federelements aus Fig. 1 von schräg oben;
- Fig. 6: eine Schnittansicht des Federelements aus Fig. 1 mit Schnitt längs durch einen der Federarme;
- Fig. 7: eine Schnittansicht des Federelements aus Fig. 1 mit Schnitt senkrecht zu den Federarmen mittig durch das Federelement;
- Fig. 8: eine perspektivische Darstellung des Federelements aus Fig. 1 von unten; und
- Fig. 9: eine perspektivische Darstellung des Federelements aus Fig. 1 von schräg unten;
- Fig. 10: eine perspektivische Darstellung einer alternativen Ausgestaltung eines Federelements.

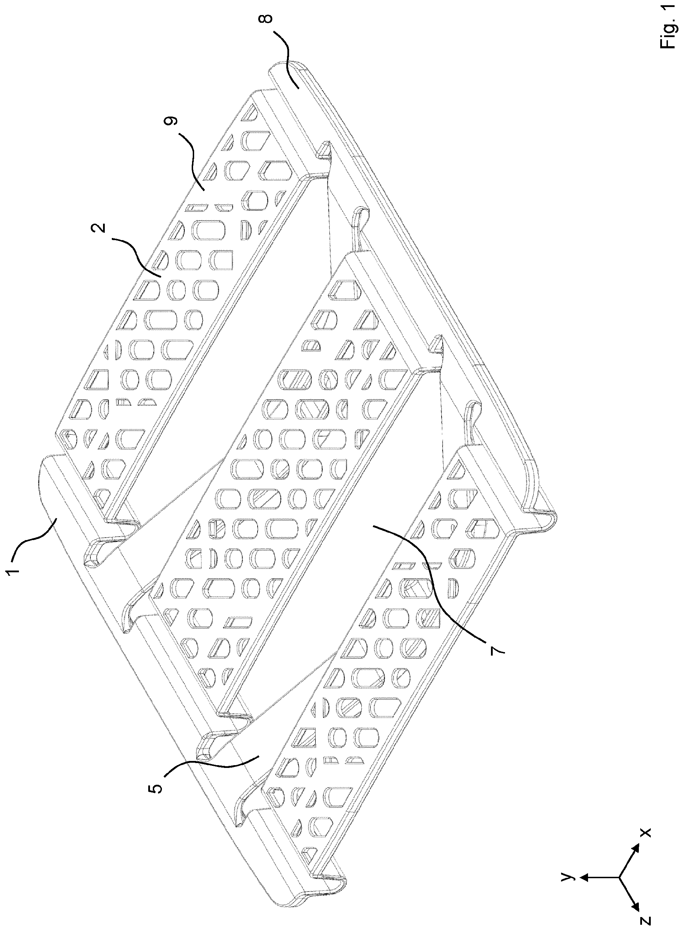

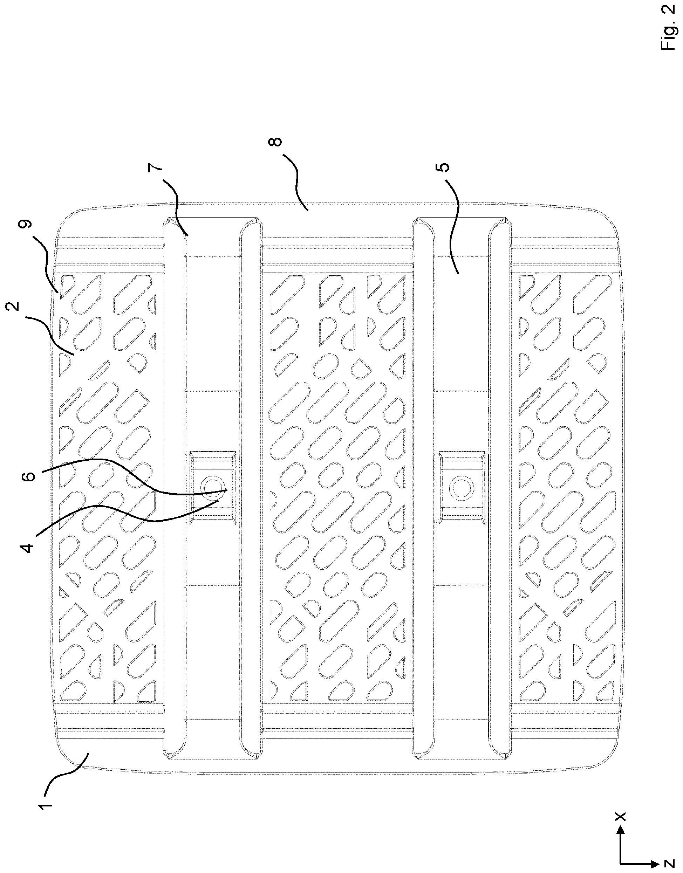

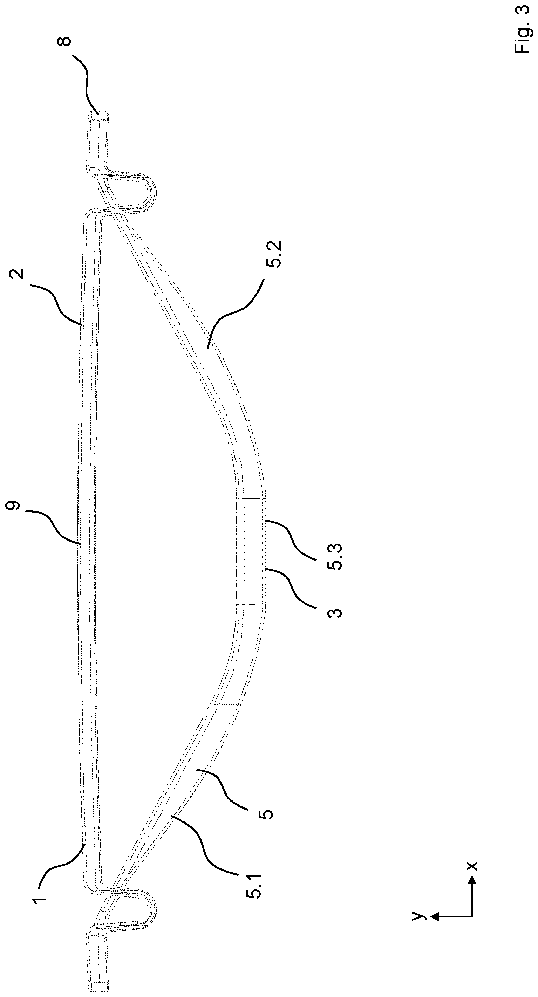

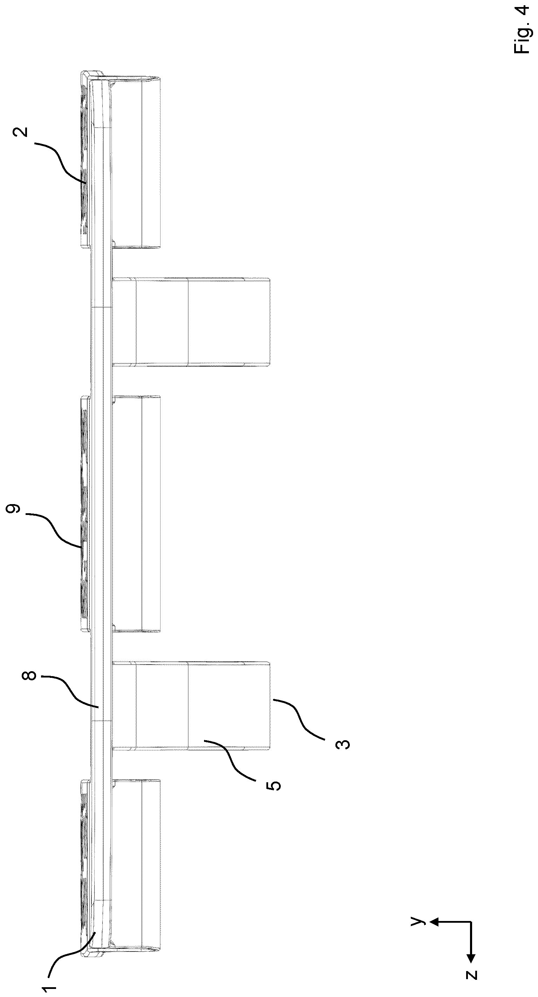

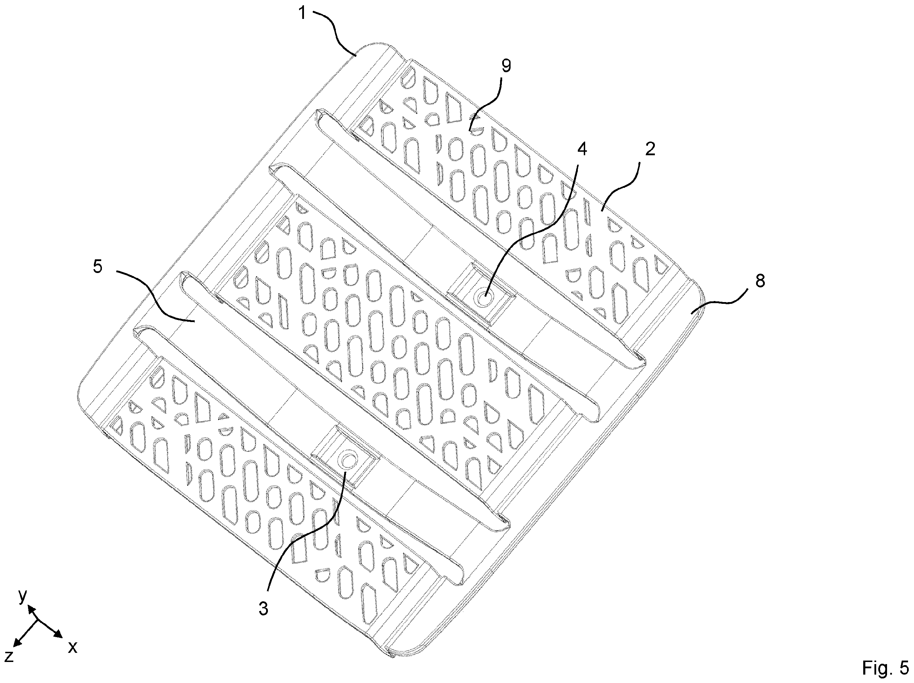

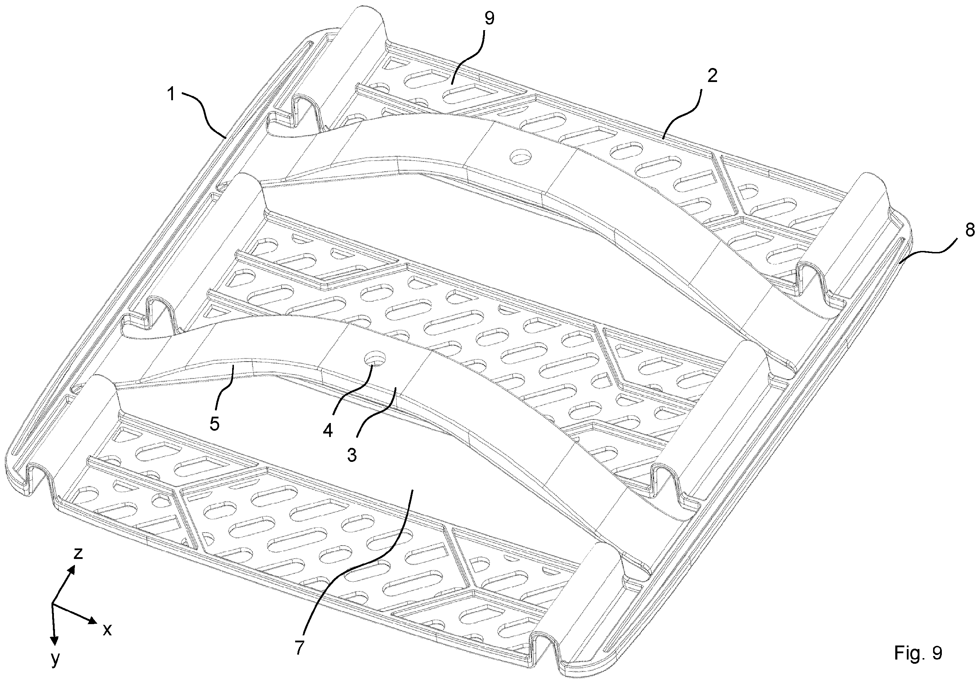

Fig. 1 zeigt eine schematische Darstellung eines Federelements 1 für eine Polsterunterlage. Die Fig. 2 bis 5 sowie 8 und 9 zeigen perspektivische Darstellungen des Federelements 1 aus Fig. 1 aus verschiedenen Richtungen.

Das Federelement 1 weist einen Auflageteller 2, Basen 3, jeweils aufweisend ein Befestigungsmittel 4 zum Befestigen des Federelements 1 auf einem Trägermaterial, und Federarme, jeweils aufweisend äußere Enden 5.1, 5.2, die mit dem Auflageteller 2 verbunden sind, und einen mittleren Abschnitt 5.3, der eine zugehörige Basis 3 der Basen 3 umfasst, wobei die Federarme 5 parallel zueinander ausgebildet sind, auf.

Bei der gezeigten Ausführungsform weist das Federelement 1 zwei Federarme 5 mit zwei Basen 3 auf. Die Basen sind frei von einer direkten (Material-)Verbindung. Die mittleren Abschnitte 5.3 der Federarme 5 sind frei von einer direkten (Material-)Verbindung. Die Federarme 5 sind lediglich über den Auflageteller 2 miteinander verbunden.

In der gezeigten Ausführungsform ist das Federelement 1 einstückig.

Der Auflageteller 2 des Federelements der gezeigten Ausführungsform umfasst äußere Randstege 8 und Querstege 9, die diese Randstege 8 miteinander verbinden. Genauer umfasst der Auflageteller 2 zwei Randstege 8 und drei Querstege 9. Die Querstege 9 sind zwischen den Randstegen 8 und senkrecht zu diesen angeordnet. Ein erster Quersteg 9 der Querstege 9 ist mit einem ersten Ende (einstückig) an ein erstes Ende des ersten Randsteges 8 der Randstege 8 und mit einem zweiten Ende (einstückig) an ein erstes Ende des zweiten Randsteges 8 der Randstege 8 angeformt. Ein zweiter Quersteg 9 der Querstege 9 ist mit einem ersten Ende (einstückig) an ein zweites Ende des ersten Randsteges 8 der Randstege 8 und mit einem zweiten Ende (einstückig) an ein zweites Ende des zweiten Randsteges 8 der Randstege 8 angeformt. Ein dritter Quersteg 9 der Querstege 9 ist mit einem ersten Ende (einstückig) mittig an den ersten Randsteg 8 der Randstege 8 und mit einem zweiten Ende (einstückig) mittig an den zweiten Randsteg 8 der Randstege 8 angeformt. Zwischen den Querstegen 9 weist der Auflageteller 2 Durchbrüche 7 auf. Die Randstege 8 weisen Abschnitte auf, die eine Verbindung mit einem Quersteg 9 umfassen, und Abschnitt, die frei von einer Verbindung mit einem Quersteg 9 sind.

Die Querstege 9 weisen weitere Durchbrüche auf. Die Randstege 8 sind frei von Durchbrüchen. Die Querstege 9 und die Randstege 8 liegen im Wesentlichen in einer Ebene.

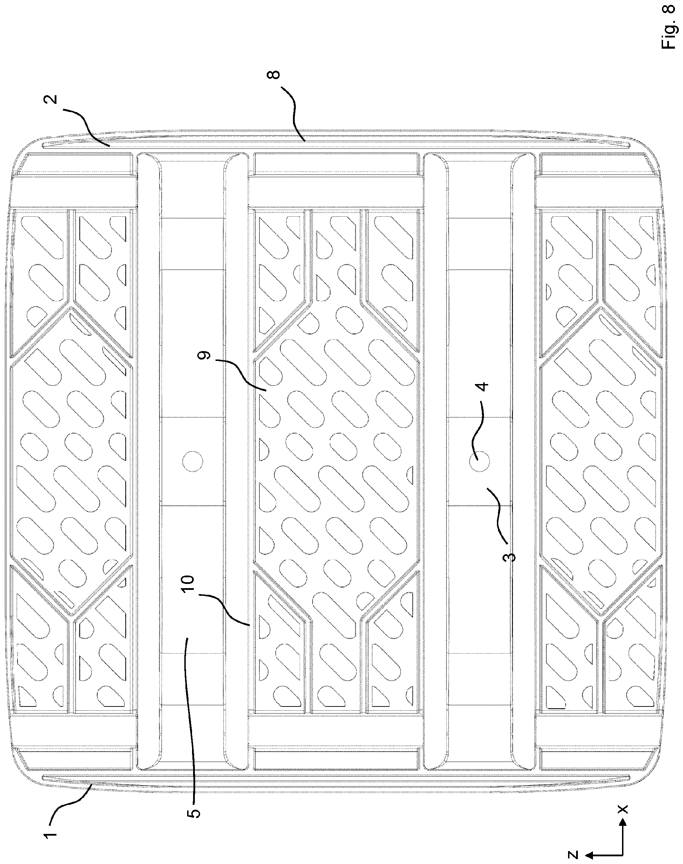

Die Unterseite des Auflagetellers 2 weist Versteifungsrippen 10 auf (vgl. Fig. 8). Die Versteifungsrippen 10 sind eingerichtet, die Steifigkeit des Auflagetellers 2 zu erhöhen. Die Versteifungsrippen 10 sind schmale längliche Bereiche des Auflagetellers 2 mit erhöhter Dicke. Entlang der Randstege 8 verlaufen die Versteifungsrippen 10 im Wesentlichen in die Längsrichtung der Randstege 8. Die Randstege weisen Versteifungsrippen 10 auf, die sich im Wesentlichen über die gesamte Länge der Randstege 8 erstrecken. Die Querstege 9 weisen Versteifungsrippen 10 auf, die sich parallel zur Längsrichtung der Querstege 9 erstrecken. Zusätzlich weisen die Querstege 9 Versteifungsrippen 10 auf, die sich schräg zur Längsrichtung der Querstege 9 erstrecken. Die Versteifungsrippen 10, die sich parallel zur Längsrichtung der Querstege 9 erstrecken, erstrecken sich im Wesentlichen über die gesamte Länge der Querstege 9 und sind entlang der langen äußeren Kante der Querstege 9 angeordnet.

In einer Draufsicht sind die Federarme 5 in den Durchbrüchen 7 zwischen den Querstegen 9 angeordnet. Die Federarme 5 sind (einstückig) an die Randstege 8 angeformt. Die jeweiligen Federarme 5 sind mit einem ersten Ende an den ersten Randsteg 8 und mit einem zweiten Ende an den zweiten Randsteg 8 angeformt. Die Federarme 5 sind dort an die Randsteg 8 angeformt, wo die Randstege 8 frei von einer Verbindung mit den Querstegen 9 sind. Die Federarme 5 sind dort an die Randstege 8 angeformt, wo die Durchbrüche 7 an die Randstege 8 angrenzen. In einer Draufsicht sind die Randstege 8 abwechselnd durch Querstege 9 und Federarme 5 verbunden, wobei außenseitig Querstege 9 bereitgestellt sind. Zwischen diesen Verbindungen sind Spalte bereitgestellt. In einer Draufsicht haben die Querstege 9 eine im Wesentlichen konstante Breite. Dies gilt auch für die Federarme 5, wobei diese endseitig bei der Verbindung mit den Randstegen 8 eine Verbreiterung aufweisen.

Die Federarme 5 sind in Bezug auf den Auflageteller 2 konkav geformt. Die beiden Enden der Federarme 5 sind an den Auflageteller 2 angeformt und die Basen 3 der Federarm 5 sind von dem Auflageteller 2 beabstandet. Die Basen 3 sind unterhalb des Auflagetellers 2 angeordnet. Die Federarme 5 können eine erste Krümmung und eine zweite Krümmung aufweisen, die von der ersten Krümmung verschieden und / oder der ersten Krümmung entgegengesetzt ist. Im Bereich der Basen 3 sind die Federarme 5 krümmungsfrei. Ausgehend von den Basen 3 können sich die Federarme 5 zunächst zum Auflageteller 2 hin krümmen und endseitig vom Auflageteller 2 weg krümmen. An den Stellen, wo die Federarme 5 an die Randstege 8 angeformt sind, weisen die Randstege 8 Einschnürungen auf.

An den Verbindungstellen zwischen Querstegen 9 und Randstegen 8 weist das Federelement 1 U-förmige Verbindungsbrücken auf. Die U-förmigen Verbindungsbrücken sind elastisch reversibel verformbar, sodass sich die Randstege 8 in eine Richtung parallel zu den Querstegen 9 voneinander weg- und / oder zueinander hinbewegen können. Diese Verformbarkeit trägt zur Federwirkung des Federelementes 1 bei. Insbesondere kann diese Verformbarkeit den wesentlichen Teil der Federwirkung des Federelementes 1 ausmachen. In diesem Fall sind die übrigen Elemente des Federelementes 1 im Wesentlichen starr.

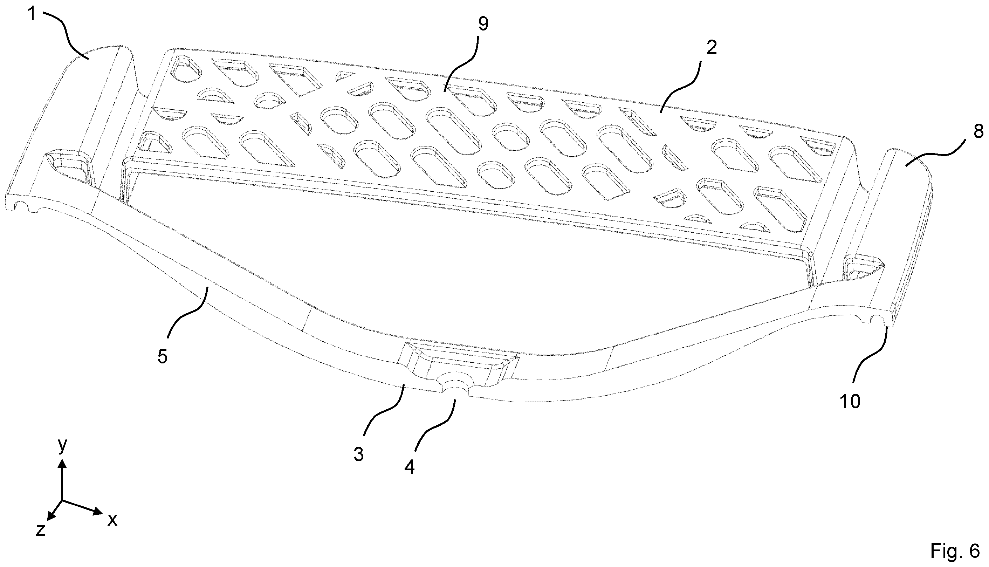

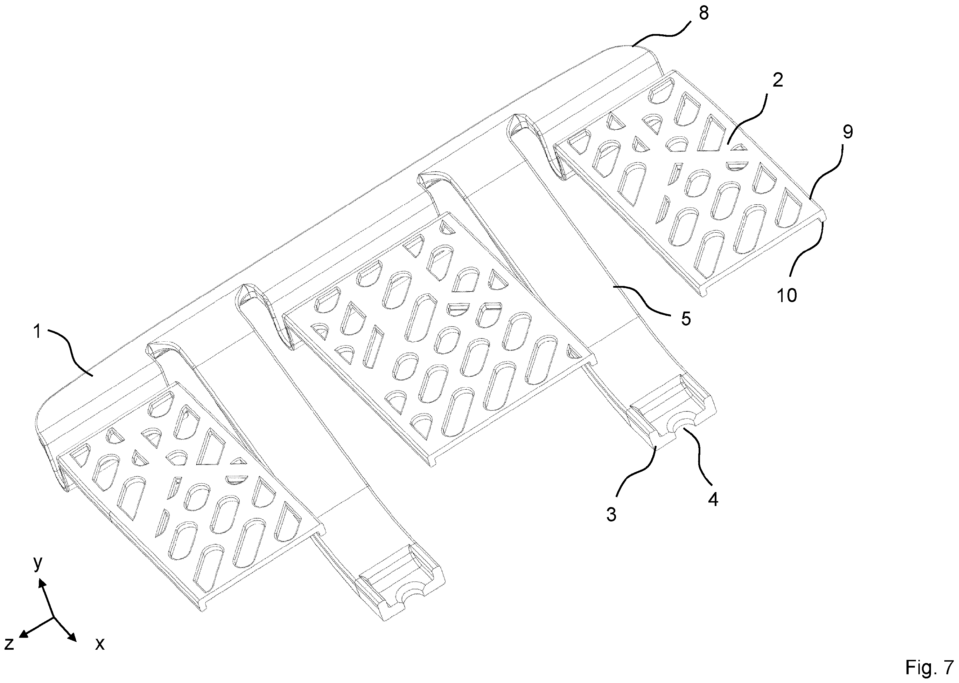

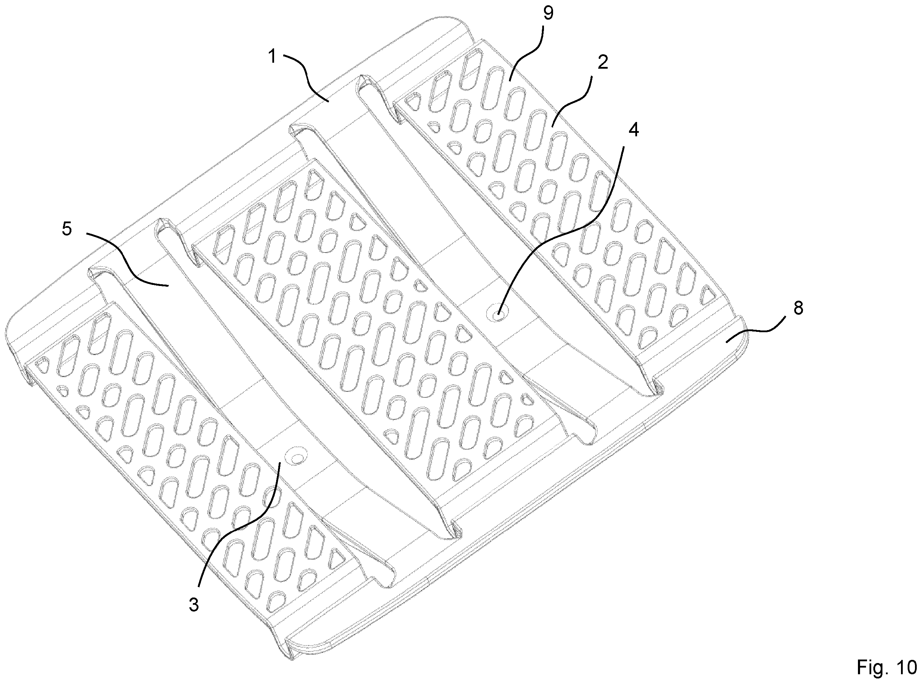

Fig. 6 zeigt eine Schnittansicht des Federelements 1 aus Fig. 1 mit Schnitt längs durch einen der Federarme 5. Fig. 7 zeigt eine Schnittansicht des Federelements 1 aus Fig. 1 mit Schnitt senkrecht zu den Federarmen mittig durch das Federelement. Die Dicke des Federarms 5 verjüngt sich ausgehend von der Basis 3 zu der Verbindung mit dem Auflageteller 2 hin. Die Basis 3 umfasst ein Befestigungsloch als Befestigungsmittel 4. Auf der Seite der Basis 3, die dem Auflageteller 2 zugewandt ist, weist der Federarm 5 um das Befestigungsloch herum eine Ausnehmung / Vertiefung auf. Über die Befestigungslöcher ist das Federelement 1 auf einem Trägermaterial befestigbar. Beispielsweise kann das Federelement 1 mit Schrauben, die durch die Befestigungslöcher geführt werden, auf das Trägermaterial geschraubt werden. Hierbei kann der Schraubenkopf in die Ausnehmung / Vertiefung versenkt werden, insbesondere derart, dass er bei einer Sicht von vorn nicht sichtbar ist. In der gezeigten Ausführung weist die Ausnehmung / Vertiefung eine Senkung für einen Schraubenkopf am Boden einer einer größeren Vertiefung / Ausnehmung auf, welche eine Verwendung eines Werkzeugs zum Befestigen einer Schreibe innerhalb der Vertiefung / Ausnehmung ermöglicht. In alternativen Ausgestaltungen kann nur eine Senkung für einen Schraubenkopf (oder Kopf eines anderen Befestigungsmittels) oder nur eine größere Vertiefung / Ausnehmung vorgesehen sein. Eine Ausgestaltung mit nur einer Senkung für einen Schraubenkopf ist beispielhaft in der Fig. 10 gezeigt.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Federelement (1) für eine Polsterunterlage, mit
- einem Auflageteller (2);
- Basen (3), jeweils aufweisend ein Befestigungsmittel (4) zum Befestigen des Federelements (1) auf einem Trägermaterial; und
- Federarmen (5), jeweils aufweisend äußere Enden (5.1, 5.2), die mit dem Auflageteller (2) verbunden sind, und einen mittleren Abschnitt (5.3), der eine zugehörige Basis (3) der Basen (3) umfasst, wobei die Federarme (5) im Wesentlichen parallel zueinander ausgebildet sind.

2. Federelement (1) nach Anspruch 1, **dadurch gekennzeichnet, dass** die Basen (3) voneinander beabstandet sind.

3. Federelement (1) nach Anspruch 1 oder 2, **dadurch gekennzeichnet, dass** in einer Draufsicht zumindest einer der Federarme (5) krümmungsfrei ist.

4. Federelement (1) nach einem der vorangehenden Ansprüche, **dadurch gekennzeichnet, dass** zumindest einer der Federarme (5) in Bezug auf den Auflageteller (2) einen konvexen Bogen formt.

5. Federelement (1) nach einem der vorangehenden Ansprüche, **dadurch gekennzeichnet, dass** das Federelement (1) einstückig geformt ist.

6. Federelement (1) nach einem der vorangehenden Ansprüche, **dadurch gekennzeichnet, dass** sich zumindest einer der Federarme (5) zur Verbindung mit dem Auflageteller (2) hin in seiner Dicke verjüngen.

7. Federelement (1) nach einem der vorangehenden Ansprüche, dadurch ge **kennzeichnet**, dass zumindest eines der Befestigungsmittel (4) ein Befestigungsloch (6) aufweist.

8. Federelement (1) nach einem der vorangehenden Ansprüche, **dadurch gekennzeichnet, dass** der Auflageteller (2) Durchbrüche (7) aufweist.

9. Federelement (1) nach Anspruch 8, **dadurch gekennzeichnet, dass** in einer Draufsicht die Federarme (5) überlappungsfrei in den Durchbrüchen (7) angeordnet sind.

10. Federelement (1) nach einem der vorangehenden Ansprüche, **dadurch gekennzeichnet, dass** der Auflageteller (2) äußere Randstege (8) und Querstege (9), die diese Randstege (8) miteinander verbinden, aufweist.

11. Federelement (1) nach Anspruch 10, **dadurch gekennzeichnet, dass** die Federarme (5) über die Randstege (8) mit dem Auflageteller (2) verbunden sind.

12. Federelement (1) nach Anspruch 10 oder 11, **dadurch gekennzeichnet, dass** die Federarme (5) und die Querstege (9) in einer Draufsicht im Wesentlichen parallel zueinander angeordnet sind.

13. Federelement (1) nach einem der Ansprüche 10 bis 12, **dadurch gekennzeichnet, dass** die Querstege (9) derart mit den Randstegen (8) verbunden sind, dass die Randstege (8) relativ zueinander verlagerbar sind.

14. Federelement (1) nach einem der Ansprüche 10 bis 13, **dadurch gekennzeichnet, dass** in einer Draufsicht die Querstege (9) und die Federarme (9) überlappungsfrei sind.

15. Anordnung mit mehreren Federelementen (1) nach einem der vorangehenden Ansprüche, wobei
- die Federelemente (1) nebeneinanderliegend angeordnet sind, derart, dass die Auflageteller (2) der mehreren Federelemente (1) gemeinsam eine Auflagefläche aufspannen;
- die Federelemente (1) über die Befestigungsmittel auf dem Trägermaterial befestigt sind.

16. Anordnung nach Anspruch 15, **dadurch gekennzeichnet, dass** die Federelemente (1) mittels Schrauben und / oder Nieten auf dem Trägermaterial befestigt sind.
